# EUROPEAN PATENT SPECIFICATION

(11) **EP 0 850 441 B1**
(45) Date of publication and mention of the grant of the patent: **09.08.2000**
(21) Application number: 96930473.2
(22) Date of filing: 05.09.1996
(51) Int. Cl.: G06F 1/00, G08B 13/22, G08B 25/00

(54) **METHOD OF MONITORING A COMPUTER SYSTEM**
VERFAHREN ZUR ÜBERWACHUNG EINES RECHNERSYSTEMS
PROCEDE DE SURVEILLANCE D'UN SYSTEME INFORMATIQUE

(30) Priority: 05.09.1995 SE 9503047
(43) Date of publication of application: 01.07.1998
(73) Proprietor: Danielsson, Daniel, 240 10 Dalby (SE); Björck, Bertil, 243 39 Höör (SE)
(72) Inventor: Danielsson, Daniel, 240 10 Dalby (SE); Björck, Bertil, 243 39 Höör (SE)
(74) Representative: Petri, Stellan
(86) International application number: SE9601103
(87) International publication number: WO9709667

(56) References cited:
- US-A- 5 406 260

## Description

### Technical field

The present invention relates to a method of monitoring a computer system, comprising a plurality of client computers, at least one server computer, and a wire-based or wireless network, by means of which every unit in the system is operatively connected to at lest one other unit in the system.

### Description of the prior art

Some decades ago the term computer network almost entirely referred to a mainframe or mini computer type of system. Such computer systems were, and still are, in principle based upon a central mainframe or mini computer, which is connected to a plurality of user terminals in a network structure. In such a system the central computer provides all processing power or "intelligence" to the system, while the user terminals are mainly provided as means for user communication, i.e. monitor and keyboard. The central computer handles all software program execution, at the same time controlling peripheral units, such as printers and tape stations, as well as handling external communications, such as telephone-based modem connections. The central computer accepts commands from the users by regularly and sequentially addressing the various terminals, and in response thereof the central computer executes certain pieces of software code and supplies resulting information back to the users. To be able to serve even a large number of connected users without any excessively long response times, such a central mainframe or mini computer comprises high-performance components, which are expensive as well as space demanding.

During the last decade or so another scenario has developed. Thanks to the progress within the field of electronics it has become possible to miniaturise and integrate computer components, and this has resulted in an almost exponential increase in computer performance, while the relative cost per unit of performance steadily has been reduced. This in turn has made it possible to decentralise the computer processing by providing the user terminals with hardware and software equipment required for execution of computer programs. As a consequence the user terminals may be assigned some of the tasks previously assigned to the central computer, thereby allowing the latter to be made simpler as well as at a lower cost. An additional advantage of such decentralised computer processing is the substantially improved opportunities of user friendly interfaces.

The user terminals referred to above are nowadays usually referred to as client computers, or merely "clients". The most common types of client computers are IBM PC-compatible personal computers, personal computers of the Macintosh-series, or Unix-type workstations. The central computer referred to above today usually corresponds to a so called server computer, or just "server". The task of a server computer is to provide service to a plurality of connected client computers in some way. Common server tasks are storing data and program files of common interest to at least some of the client computers, handling printouts from the client computers, maintaining a sufficient level of data security and integrity within the system by requiring passwords from the users, managing safety backups of data and program files, etc.

In modern computer systems the network is usually physically represented by a plurality of coaxial or twisted pair electric cables, by means of which the various units in the system are interconnected. The client computers, usually appearing at large numbers and normally belonging to any of the client computer types described above, are connected to the physical network by means of for instance network cards or communication ports. The client computers may for instance be provided with operating systems such as MS-DOS and/or Windows, OS/2 or Unix. Some client operating systems are able to handle a direct network access. Other systems, such as MS-DOS and Windows, must be provided with additional software modules, such as Novell Netware, for network access. Furthermore, one or several server computers are connected to the network. A server computer is usually realized by some type of powerful micro computer administrating the network by means of any network operating system available on the market, among which Novell Netware, Windows NT, Unix, LAN Manager and AppleTalk are the most common. Even mainframe and mini computers of the kinds described above may be connected to the network and function as server computers through an appropriate software interface.

A very important aspect in network systems is data security. Traditionally a high level of data security is regarded to be fulfilled, if the system in question is provided with carefully selected routines for safety backup copying of data and program files to external storage media (such as magnetic tapes), as well as routines for authorization control when accessing the network (login control with respect to passwords, authority levels with respect to the authorities given to individual users, etc). Recently, a third kind of security problems has emerged, namely theft or attempted theft of computers and peripherals comprised in the network.

As long as the computer systems were traditional mainframe and mini computer systems, respectively, the theft risk was low or even negligible. Certainly, it did happen on rare occasions that unauthorized people accessed the computer centrals and stole parts of the computer equipment, but due to the very low demand for such stolen and cubic-meter sized central computers, and since the user terminals were substantially useless to third persons, such theft activities were hardly prosperous. Today the situation is completely different. As even our homes are being computerized with normal PC-compatible or Macintosh type personal computers, there is a substantially higher demand for stolen computer equipment. Most client computers are today well-equipped personal computers with monitors, and may in principle be used directly even outside a network.

Furthermore, it has become more and more common that the persons carrying out the burglaries and thefts are provided with expert knowledge on the economic values of the components comprised in the computers. Hence, a burglar of today is often aware of the fact that components such as internal memory circuits, hard disks, CD-ROM players, motherboards, etc, are to be regarded as valuable, since not only may they be easily disassembled and carried away, but they are also attractive on the market of stolen property. Consequently, it is nowadays common that the burglar will not, as before, steal and carry away complete computers, but instead remove the computer housing or the like and to some extent consider the values of the individual components in the computers so as to steal only such components, which are found to be of interest.

It may easily be perceived that the problems above are a threat to data security. Besides the strictly economical cost of replacing stolen computers or computer components, the victim is in addition subjected to the inconvenience, as well as the economical loss inherent thereof, that the attacked computers - and in worse cases the entire system - are useless, until the stolen equipment has been replaced. If the stolen equipment comprises permanent storage means such as hard disks, etc, there is also a risk of having business-sensitive data stored thereon disappearing from the company. Another negative consequence of a computer theft as described above is the tendency of certain criminal individuals of returning to the crime scene after some time, in order to carry out a new round of burglary, since the stolen equipment will then probably have been replaced by new and even more attractive equipment.

Previously known attempts of preventing theft of computers and peripherals have been directed to installation of a conventional and separately arranged anti-theft system, for instance a surveillance system with infrared or acoustic intruder detection means, sometimes combined with burglary sensors attached to windows and doors. Such a conventional anti-theft system has the disadvantage of requiring an extensive wiring and detector installation. In addition, by experience among criminal individuals methods have been developed of avoiding conventional surveillance equipment, for instance by making a survey of the various detector locations in the premises on beforehand and then only carrying out the burglary in such zones, which are out of reach of the detectors. Furthermore, some alarm systems may be deactivated by interrupting the supply of power to a central unit comprised in the alarm system.

In US-A-5 406 260 a network security system for detecting removal of electronic equipment is disclosed. The system makes use of an existing 10BaseT communication link so as to form a current loop for each monitored piece of equipment. An electric current is fed into the current loop, and if the monitored equipment is removed from the network, the flow of current in the current loop is interrupted and detected by the security system. Thus, the system is limited to networks with suitable topology (i.e., a 10BaseT star or ring configuration), and furthermore the system is unable to detect the removal of certain components located inside each piece of equipment.

In the introductory portion of US-A- 5 406 260 various prior and approaches are briefly described, including one in which a special electronic card is provided inside each computer in a computer network, the electronic card responding to polls from an external monitoring station and the monitoring station being arranged to generate an alarm signal in the absence of response from the electronic card. However it is not specified that the same communication link and protocol should be used for monitoring as for network communications.

### Summary of the invention

According to the invention there is provided a method of monitoring a computer system, comprising a plurality of client computers, at least one server computer, and a wire-based or wireless network, by means of which each unit in the system is operatively connected to at least one other unit in the system. The fundamental idea of the present invention is to make use of the already existing network to continuously check that all computers and peripherals connected to the network are still present in an original state. Should the contact with any of the units in the system be lost, for instance due to an unauthorized removal of units in the system, or parts of these units, this event will be detected and an alarm signal will be generated in response thereto. As a consequence the monitoring may be more accurately performed as well as at a lower cost than with the conventional surveillance equipment described above, partly thanks to the eliminated need for any new wire installation and thanks to the fact that conventional methods of deactivating such conventional surveillance equipment are no longer applicable.

The object of the invention is achieved by a method of monitoring a computer system with the features appearing from the appended patent claims.

### Brief description of the drawing

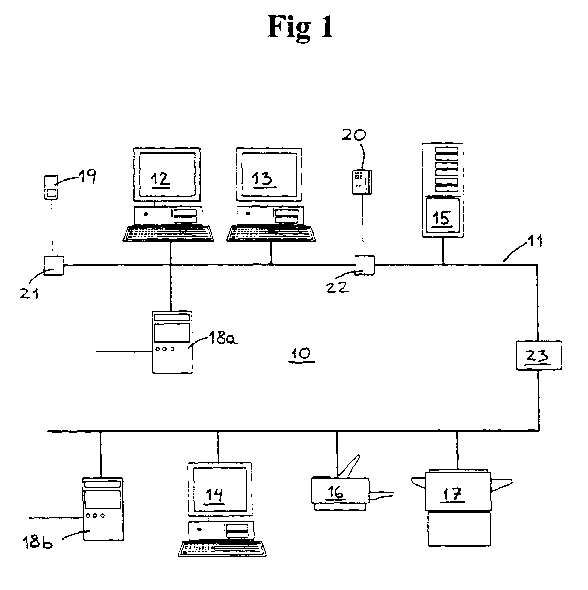

Preferred applications of the method according to the invention will now be described in more detail in the following, reference being made to the accompanying drawing, on which FIG 1 schematically illustrates an exemplary computer system, in which the method according to the invention is applied.

### Description of preferred applications

In FIG 1 there is shown an example of how the invention may be applied in a modern computer system. The computer system 10 of FIG 1 comprises a wire-based network 11, to which a plurality of client stations 12, 13, 14 as well as a server computer 15 are connected. Additionally common types of peripherals, such as printers and modems, may be connected to the network 11. Furthermore, in FIG 1 it is indicated that even other kinds of peripherals, such as telefax and copying machines 16, 17, may be directly connected to the network. There is already today a clear tendency at certain companies to connect such equipment to the network, and it must be regarded as likely, that the computer networks of the future will comprise a variety of such equipment.

Preferably the network 11 is physically comprised of an electric wiring of coaxial cable or twisted-pair cable type, but also other alternatives are possible; wirebased as well as wireless. Low-level communication is occurring on the network in accordance with any established standard, such as the network protocols Ethernet or Token Ring, both of which are members of the IEEE 802 family. High-level communication is occurring according to a standard suitable for the low-level protocol chosen, for instance Novell SPX/IPX or the Unix's TCP/IP protocol. For accessing the network the connected units are provided with appropriate interface means, such as a network card corresponding to the network protocols chosen. According to the invention each network unit, that is to be monitored, is provided with a surveillance module with the following features.

The surveillance module is capable of continuously monitoring its host unit, i.e. the computer, printer, copying machine, etc, to which the surveillance module belongs, so as to detect any change in configuration or other status. The surveillance module may for instance be arranged to detect when the housing of the host unit is opened, when components comprised in the host unit are removed, when the supply of power to the host unit is interrupted, or whenever the host unit loses contact with the network.

According to another preferred application the surveillance module may instead be arranged to collect status information about the host unit at given moments in time, i.e. with no particular focus on a change in status.

Furthermore, the surveillance module is arranged to supply the detected or collected information described above through the network 11 to an alarm unit comprised in the computer system. This communication occurs according to any network protocol already used in the computer system, thereby avoiding conflicts with other hardware and software within the system.

The simplest way of realizing the surveillance module is to provide the existing network card with a sensor, which is arranged to detect whenever the host unit is opened. It is of greatest importance that the surveillance module - in this case the sensor - is operational, even when the rest of the host unit is powerless, for instance due to a deliberate interruption of the power supply in connection with an attempted burglary. Hence, the surveillance module is preferably provided with its own power source, for instance a longlife battery. Such batteries are already today used in a variety of applications, and hence they are not described in more detail here.

Whenever the sensor detects that the host unit has been opened or that the ordinary power supply has been interrupted, the sensor will report this condition through the network to the afore-mentioned alarm unit, which will be described further below.

In a more advanced application the surveillance module is arranged to collect information according to the above about the configuration of the host computer, i.e. the number and size of internal memory circuits, the presence of secondary storage such as a hard disk or a CD-ROM player, the presence of a graphic card and a monitor connected to the host unit, etc. According to this application the host computer will be supplemented by certain hardware and/or software, so that the surveillance module may be in a continuous contact with the different parts or components in the host computer. This concept, which may be referred to as "Safety Channel", will hence mean that certain selected components in a host computer will be in constant operative connection with a surveillance module in the host computer. In accordance with the more simple application described above the "Safety Channel" application will be supplemented by a battery or another type of uninterruptable power source. The surveillance module itself may for instance be realized as an electronic circuit on the network circuit board, as an independent expansion card or as a software module alone, which may be integrated on a low-level basis in the operating system of the host computer or which as an alternative may be executed as a memory resident program module.

The alarm unit referred to above is operatively connected to the network 11 and is adapted to receive information from the surveillance module of each respective monitored network unit. The alarm unit - which may be realized as a software module in the server computer 15, as a software module in any of the client computers 12, 13, 14 comprised in the computer system 10, or as a separate unit connected to the network - will continuously check the incoming information so as to detect an unauthorized manipulation of equipment within the computer system 10, for instance an attempted theft.

In such applications where the surveillance modules according to the above themselves will detect a change in the equipment within their respective host unit, the alarm unit simply has to generate an external alarm signal, whenever any surveillance module has reported such a change. If, however, the surveillance modules are arranged to report the momentary status for the equipment, the alarm unit will be provided with a conventional electronic memory, in which the expected status for each monitored network unit is stored. The expected status may for instance be information about internal memory or hard disk size, the number of peripherals connected, such as CD-ROM player and monitor, etc. Whenever the reported status deviates from the expected status stored in the electronic memory, an external alarm signal will be generated. Furthermore, the alarm unit may be arranged to regularly and sequentially poll the monitored units itself and command them to supply their respective status information according to the above. Also this polling activity occurs according to the same network protocol, which is normally used in the computer system.

The external alarm signal is preferably an alarm to a security company, the police or the security managers at the company, for instance by having the alarm signal activate a communication program run on any client computer 12, 13, 14 or server computer 15 within the computer system 10, wherein the program will call the desired party by means of a modem. In order to further increase the security separate cellular telephones or radio transmitters 18a, 18b may be connected to the computer system 10, wherein the alarm may take place wirelessly to the receiving cellular telephone or radio receiver.

Even the server computer 15 comprised in the computer system may be provided with a surveillance module according to the above and take part among the monitored units, if the alarm unit is realized as an individual unit separated from the server computer, which in accordance with the surveillance modules described above is provided with an uninterruptable power supply by means of a battery or the like.

According to a more advanced application the alarm unit - be it realized as a software module in a computer or as a separate unit - may be programmed in such a way, that different alarm conditions are used. For instance, an interruption of the normal power supply of the computer system may be allowed without giving an alarm, provided that the interruption is not followed by any reports on other kinds of disturbances, thereby avoiding that a false alarm is given for instance during thunderstorms. In addition the alarm unit may be programmed to supply more detailed alarm information, when external alarm is given, for instance by reporting the kind of change that has taken place in the computer system, or which pieces of equipment that have been affected.

It is also possible to practice the method of monitoring according to the invention in combination with already existing conventional surveillance equipment, such as intruder detectors 19 or entrance control units 20. Such conventional units are then provided with modified surveillance modules 21, 22, which are arranged to receive an alarm signal from the detectors 19 and the units 20, respectively, and forward these through the network 11 to the alarm unit described above.

Additionally, the network 11 may be galvanically separated by means of network section units 23. Every section of the network 11 is then preferably provided with its own alarm unit, said alarm units being able to monitor each other to cause an alarm, should any other alarm unit or section of the network be made inoperational. Alternatively, the entire network 11, or portions thereof, may consist of a wire-based optical or a wireless communication link, respectively, of previously known design.

The description above for the preferred applications of the method according to the invention are only to be taken as examples. Other applications may deviate from what has been described above within the scope of the invention, as defined in the appended patent claims. In particular, the term server computer is to be interpreted in a broad sense; the server computer 15 may be constituted by a pure printer and application server (a so called network server) in a "real" server network, but alternatively, it may be represented by any given client computer 12, 13, 14 in a "peer-to-peer" network, in which the different client computers mutually share their own resources as well as printers and hard disks, and consequently act as client computers as well as server computers.

## Claims

1. A method of monitoring a computer system (10) for unauthorised manipulation of equipment within the computer system, the system comprising a plurality of client computers (12, 13, 14), at least one server computer (15), an alarm unit and a wirebased or wireless network (11), by means of which each computer in the system is operatively connected, in accordance with at least one network protocol, to at least one other computer in the system, wherein client computer information is locally produced in at least some of the client computers, wherein the client computer information is supplied to the alarm unit, and wherein the alarm unit produces an alarm signal in one of the following situations: in response to receiving client computer information having a predetermined content, in the absence of client computer information, or if a change in contents occurs for the client computer information, wherein the client computer information is transmitted to the alarm unit over the network (11) and according to the at least one network protocol.

2. A method according to claim 1,
**characterized** in that said client computer information comprises information about the operative connection between the client computer (12, 13, 14) and the rest of the computer system (10).

3. A method according to claim 1,
**characterized** in that said client computer information comprises information about components in the client computer (12, 13, 14), such as internal memory, hard disk, CD-ROM player, etc.

4. A method according to any preceding claim,
**characterized** in that said network (11) at least partly is constituted by a set of electrical wires of coaxial cable or twisted-pair cable type.

5. A method according to any preceding claim,
**characterized** in that said network (11) is at least partly constituted by an optical fibre cable.

6. A method according to any preceding claim,
**characterized** in that said network protocol(s) is/are in accordance with any of the network standards IEEE 802.3, IEEE 802.4 or IEEE 802.5.

7. A method according to any preceding claim, wherein the computer system (10) further comprises peripheral equipment (16,17) wherein peripheral equipment information is locally produced in said peripheral equipment, wherein the information is supplied to the alarm unit, wherein the alarm unit produces an alarm signal in one of the following situations: in response to receiving peripheral equipment information having a predetermined content, in the absence of peripheral equipment information, or if a change in contents occurs for the peripheral equipment information, wherein the peripheral equipment information is transmitted to the alarm unit over the network (11) and according to the at least one network protocol.

8. A method according to claim 7,
**characterized** in that said peripheral equipment (16, 17) at least partly comprises telefax equipment (16).

9. A method according to claim 7,
**characterized** in that said peripheral equipment (16, 17) at least partly consists of a copying machine (17).

10. A method according to claim 7,
**characterized** in that said peripheral equipment at least partly is constituted by conventional surveillance equipment (19, 20).

11. A method according to any preceding claim,
**characterized** in that all monitored units (12, 13, 14; 16, 17) are provided with their own power source, said power source being operational also when the rest of the computer system (10) is powerless.

12. A method according to any preceding claim,
**characterized** by the additional step of
when said alarm signal is generated by the alarm unit, establishing a telephone-based contact with at least one subscriber, who is located outside the premises, in which the computer system (10) is situated.

13. A method according to any preceding claim,
**characterized** in that the alarm unit is constituted by a computer program executed or run in said server computer (15) or in any of the client computers.

## Patentansprüche

1. Ein Verfahren zur Überwachung eines Rechnersystems (10) hinsichtlich einer unberechtigten Manipulation eines Gerätes innerhalb dem Rechnersystem, wobei das System umfaßt mehrere Client-Rechner (12, 13, 14), wenigstens einen Server-Rechner (15), eine Alarmeinrichtung und ein verkabeltes oder unverkabeltes Netzwerk (11), mittels dessen jeder Rechner im System, entsprechend wenigstens einem Netzwerkprotokoll, mit wenigstens einem anderen Rechner in dem System funktionsmäßig verbunden ist, wobei die Client-Rechner-Information in wenigstens einigen der Client-Rechner lokal erzeugt wird, wobei die Client-Rechner-Information zur Alarmeinrichtung geliefert wird, und wobei die Alarmeinrichtung ein Alarmsignal in einer der folgenden Situationen erzeugt: als Antwort auf den Erhalt einer Cient-Rechner-Information mit einem vorab festgelegten Inhalt, bei Fehlen einer Client-Rechner-Information oder wenn eine inhaltlichen Änderung hinsichtlich der Client-Rechner-Information eintritt, dadurch gekennzeichnet, daß die Client-Rechner-Information über das Netzwerk (11) und entsprechend dem wenigstens einen Netzwerkprotokoll übertragen wird.

2. Ein Verfahren nach Anspruch 1, dadurch gekennzeichnet, daß besagte Client-Rechner-Information Informationen über die funktionsmäßig Verbindung zwischen dem Client-Rechner (12, 13, 14) und dem Rest des Rechnersystems (10) umfaßt.

3. Ein Verfahren nach Anspruch 1, dadurch gekennzeichnet, daß besagte Client-Rechner-Information Informationen über Komponenten in dem Client-Rechner (12, 13, 14), wie z. B. interner Speicher, Festplatte, CD-ROM-Abspielgerät etc. umfaßt.

4. Ein Verfahren nach irgendeinem vorangehenden Anspruch, dadurch gekennzeichnet, daß besagtes Netzwerk (11) zumindest teilweise durch einen Satz von elektrischen Drähten vom Typ Koaxialkabel oder verdrilltes Leiterpaar gebildet ist.

5. Ein Verfahren nach irgendeinem vorangehenden Anspruch, dadurch gekennzeichnet, daß besagtes Netzwerk (11) wenigstens teilweise aus einem Lichtleiterkabel gebildet ist.

6. Ein Verfahren nach irgendeinem vorangehenden Anspruch, dadurch gekennzeichnet, daß besagte(s) Netzwerkprotokoll(e) irgendeinem der Netzwerk-Standards IEEE 802.3, IEEE 802.4 oder IEEE 802.5 entspricht/entsprechen.

7. Ein Verfahren nach irgendeinem vorangehenden Anspruch, bei dem das Rechnersystem (10) außerdem Peripheriegeräte (16, 17) umfaßt, wobei die Peripheriegerät-Information in besagtem Peripheriegerät lokal erzeugt wird, wobei die Client-Rechner-Information an die Alarmeinrichtung geliefert wird, wobei die Alarmeinrichtung ein Alarmsignal in einer der folgenden Situationen erzeugt: als Antwort auf den Erhalt von Peripheriegerät-Information mit einem vorab festgelegten Inhalt, bei Fehlen einer Peripheriegerät-Information oder wenn eine Änderung des Inhalts der Peripheriegerät-Information auftritt, wobei die Peripheriegerät-Information über das Netzwerk (11) und entsprechend dem wenigstens einen Netzwerkprotokoll übertragen wird.

8. Ein Verfahren nach Anspruch 7, dadurch gekennzeichnet, daß besagtes Peripheriegerät (16, 17) wenigstens teilweise eine Telefaxeinrichtung (16) umfaßt.

9. Ein Verfahren nach Anspruch 7, dadurch gekennzeichnet, daß besagtes Peripheriegerät (16, 17) wenigstens teilweise aus einem Kopiergerät (17) besteht.

10. Ein Verfahren nach Anspruch 7, dadurch gekennzeichnet, daß besagtes Peripheriegerät wenigstens teilweise durch eine Überwachungsanlage (19, 20) gebildet wird.

11. Ein Verfahren nach irgendeinem vorangehenden Anspruch, dadurch gekennzeichnet, daß alle überwachten Einrichtungen (12, 13, 14; 16, 17) mit deren eigenen Stromversorgungen versehen sind, wobei die Stromversorgung auch funktioniert, wenn der Rest des Rechnersystems (10) ohne Strom ist.

12. Ein Verfahren nach irgendeinem vorangehenden Anspruch, gekennzeichnet durch den zusätzlichen Schritt, daß bei Erzeugung besagten Alarmsignals durch die Alarmeinrichtung ein Telefonkontakt mit wenigstens einem Teilnehmer hergestellt wird, der sich außerhalb der Räumlichkeiten befindet, in dem sich das Rechnersystem (10) befindet.

13. Ein Verfahren nach irgendeinem vorangehenden Anspruch, dadurch gekennzeichnet, daß die Alarmeinrichtung von einem Rechnerprogramm gebildet wird, das in besagtem Server-Rechner (15) oder in irgendeinem der Client-Rechner ausgeführt wird oder läuft.

## Revendications

1. Procédé de contrôle d'un système informatique (10) portant sur une manipulation non autorisée de matériel à l'intérieur du système informatique, le système comportant plusieurs ordinateurs clients (12, 13, 14), au moins un ordinateur serveur (15), une unité d'alarme et un réseau câblé ou sans fil (11), au moyen duquel chaque ordinateur dans le système est connecté fonctionnellement, conformément à au moins un protocole de réseau, à au moins un autre ordinateur dans le système, dans lequel une information d'ordinateur client est produite localement dans au moins certains des ordinateurs clients, dans lequel l'information d'ordinateur client est fournie à l'unité d'alarme, et dans lequel l'unité d'alarme produit un signal d'alarme dans l'une des situations suivantes : en réponse à la réception d'une information d'ordinateur client ayant un contenu prédéterminé, en l'absence d'informations d'ordinateur client, ou bien si un changement de contenu apparaît pour l'information d'ordinateur client, caractérisé en ce que l'information d'ordinateur client est transmise à l'unité d'alarme par le réseau (11) et conformément au, au moins un, protocole de réseau.

2. Procédé selon la revendication 1,
caractérisé en ce que ladite information d'ordinateur client comprend une information concernant la connexion fonctionnelle entre l'ordinateur client (12, 13, 14) et le reste du système informatique (10).

3. Procédé selon la revendication 1,
caractérisé en ce que ladite information d'ordinateur client comprend une information concernant des constituants dans l'ordinateur client (12, 13, 14), telle qu'une mémoire interne, un disque dur, un lecteur de CD-ROM, etc.

4. Procédé selon l'une quelconque des revendications précédentes,
caractérisé en ce que ledit réseau (11) est constitué au moins partiellement par un ensemble de fils électriques du type câble coaxial ou d'un type de câble à paires torsadées.

5. Procédé selon l'une quelconque des revendications précédentes,
caractérisé en ce que ledit réseau (11) est constitué au moins partiellement par un câble à fibre optique.

6. Procédé selon l'une quelconque des revendications précédentes,
caractérisé en ce que ledit protocole et/ou lesdits protocoles de réseau est/sont conforme(s) à l'une quelconque des normes de réseau IEEE 802.3, IEEE 802.4 ou IEEE 802.5.

7. Procédé selon l'une quelconque des revendications précédentes, dans lequel le système informatique (10) comporte en outre un équipement périphérique (16, 17) dans lequel une information d'équipement périphérique est produite localement dans ledit équipement périphérique, dans lequel l'information d'ordinateur client est fournie à l'unité d'alarme, dans lequel l'unité d'alarme produit un signal d'alarme dans l'une des situations suivantes : en réponse à la réception d'une information d'équipement périphérique ayant un contenu prédéterminé, en l'absence d'informations d'équipement périphérique, ou bien si un changement de contenu apparaît pour l'information d'équipement périphérique, dans lequel l'information d'équipement périphérique est transmise à l'unité d'alarme par le réseau (11) et conformément au, au moins un, protocole de réseau.

8. Procédé selon la revendication 7,
caractérisé en ce que ledit équipement périphérique (16, 17) comprend au moins partiellement un équipement de télécopie (16).

9. Procédé selon la revendication 7,
caractérisé en ce que ledit équipement périphérique (16, 17) est constitué au moins partiellement par une machine de copie (17).

10. Procédé selon la revendication 7,
caractérisé en ce que ledit équipement périphérique est constitué au moins partiellement par un équipement classique de surveillance (19, 20).

11. Procédé selon l'une quelconque des revendications précédentes,
caractérisé en ce que toutes les unités contrôlées (12, 13, 14 ; 16, 17) sont pourvues de leur propre source d'énergie, ladite source d'énergie étant fonctionnelle également lorsque le reste du système informatique (10) n'est pas alimenté en énergie.

12. Procédé selon l'une quelconque des revendications précédentes,
caractérisé par l'étape additionnelle dans laquelle
lorsque ledit signal d'alarme est généré par l'unité d'alarme, un contact par téléphone est établi avec au moins un abonné qui se trouve en-dehors des emprises dans lesquelles le système informatique (10) est situé.

13. Procédé selon l'une quelconque des revendications précédentes,
caractérisé en ce que l'unité d'alarme est constituée par un programme informatique exécuté ou lancé dans ledit ordinateur serveur (15) ou dans l'un quelconque des ordinateurs clients.
